# DEMANDE DE BREVET EUROPEEN

(11) **EP 3 907 155 A1**
(43) Date de publication de la demande: **10.11.2021**
(21) Numéro de dépôt: 20173484.5
(22) Date de dépôt: 07.05.2020
(51) Int. Cl.: B65D 85/76, B65D 77/20, B65D 81/24, A23C 19/16

(54) **EMBALLAGE DE TRANCHE DE FROMAGE**

(71) Demandeur: Eurial, 44300 Nantes (FR)
(72) Inventeur: AUGELET, Gilles, 86170 Cissé (FR); VERBIESE, Sébastien, 44470 Mauves sur Loire (FR)
(74) Mandataire: Germain Maureau

(57) **Abrégé**

L'invention concerne un kit pour l'emballage d'au moins une tranche de fromage, l'utilisation d'un tel kit, un procédé d'emballage et une tranche de fromage ainsi conditionnée. Le kit de l'invention comprend une barquette plastique dans laquelle la tranche au moins de fromage sera déposée sur sa face inférieure, éventuellement un film plastique perméable à l'air, destiné à fermer, par soudure, la barquette contenant ladite tranche au moins, du côté de sa face supérieure, et au moins un disque plastique peu ou non perméable à l'air, d'une surface sensiblement identique à celle de la face supérieure, destiné à être appliqué directement contre la face supérieure de ladite tranche au moins.

## Description

L'invention concerne un emballage pour conditionner une ou des tranches de fromage, un procédé de conditionnement impliquant un tel emballage et un fromage ainsi emballé.

Elle est plus particulièrement décrite en référence à un fromage affiné ayant une forme cylindrique de type bûche, par exemple bûche de chèvre, car c'est sous cette configuration qu'il se prête le plus avantageusement à la coupe, à la fois pour le consommateur en termes de qualité et de disponibilité et pour le fabriquant en terme économique. L'invention n'est bien entendu pas limitée à une telle mise œuvre, l'emballage et le procédé pouvant être adaptés à toute tranche issue de la coupe d'un fromage ayant une forme différente, même irrégulière, notamment pour conférer au produit final une certaine originalité, le fromage pouvant être frais ou plus ou moins affiné.

La bûche de chèvre est disponible à la coupe chez le fromager mais il est aussi avantageux qu'elle soit proposée emballée à l'unité, en particulier compte tenu de son large spectre d'emploi, seule, en salade ou cuisinée, d'autant plus facilité qu'elle peut être congelée pour une utilisation à la demande, congelée ou décongelée. Les tranches de fromage les plus couramment trouvées dans le commerce sont des tranches de bûche de chèvre affinée, conditionnées à l'unité ou non dans une barquette plastique recouverte, hermétiquement ou non, d'un film plastique. La tranche présente une croûte blanche à l'extérieur et une texture légèrement friable.

Le problème rapidement rencontré au cours du stockage et de la conservation du produit, même dans des conditions appropriées, c'est-à-dire au froid, se trouve dans le développement de moisissures à la surface des tranches qui affectent l'aspect du fromage et, dans certains cas, ses qualités organoleptiques.

Différentes recherches ont été menées pour remédier à cet inconvénient sans toutefois de véritable succès. En particulier, le film plastique recouvrant la tranche a été étudié afin de trouver une structure qui permet d'optimiser les échanges entre l'intérieur de la barquette et l'extérieur de manière telle que l'apparition de moisissures est empêchée ou au moins retardée.

L'invention apporte une réelle solution à ce problème qui vient compléter les présentations existantes et permet donc de ne pas fondamentalement remettre en question ces dernières.

Il a ainsi été découvert que l'application, directement sur la tranche, de disques essentiellement taillés à la dimension de la surface de la tranche, avant de filmer la barquette garnie, permet d'augmenter le temps de conservation du produit emballé, sans conséquence sur ses qualités et notamment son goût.

L'invention apporte un kit pour l'emballage d'au moins une tranche de fromage, ladite tranche ayant une face inférieure et une face supérieure, ledit kit comprenant une barquette plastique dans laquelle la tranche au moins de fromage sera déposée sur sa face inférieure, éventuellement un film plastique perméable à l'air, destiné à fermer, par soudure, la barquette contenant ladite tranche au moins, du côté de sa face supérieure, et au moins un disque plastique peu ou non perméable à l'air, d'une surface sensiblement identique à celle de la face supérieure, destiné à être appliqué directement contre la face supérieure de ladite tranche au moins. Selon une variante de l'invention, le kit comprend au moins deux disques plastique, peu ou non perméables à l'air, d'une surface sensiblement identique à celle de chacune des faces inférieure et supérieure, respectivement, destinés à être appliqués directement contre les faces inférieure et supérieure, respectivement, de ladite tranche au moins.

Il convient d'interpréter selon l'invention qu'un kit comprend au moins ladite barquette plastique et au moins le ou les disques. Le film plastique étant placé une fois le fromage déposé dans la barquette, il ne fait pas nécessairement partie intégrante du kit, selon le procédé d'emballage.

La solution de l'invention se révèle particulièrement efficace lorsque le film plastique destiné à fermer la barquette a une perméabilité à l'air, déterminée par la méthode de Bendtsen, de 5 mL/min à 50 000 mL/min. Une telle perméabilité peut être obtenue par un traitement mécanique du film, elle peut aussi l'être en ajustant la porosité du film par des microperforations adéquates. Avantageusement, le film n'est pas microperforé et sa perméabilité résulte d'un traitement mécanique adapté. On a ainsi observé que le produit pouvait être conservé jusqu'à 50 jours, voire plus, après son emballage, soit de 10 à 15 jours de plus que pour un produit classiquement conditionné dans une barquette filmée. La méthode de Bendtsen est une méthode classique bien connue de l'homme du métier qui mesure le débit d'air moyen qui traverse une unité de surface sous une unité de différence de pression en une unité de temps, exprimée en mL/min, telle que décrite pour le papier dans la norme ISO5636-3.

Le film plastique est de préférence en un matériau choisi parmi les polyoléfines et notamment les polyéthylènes et les polypropylènes, les copolymères oléfines/alcool vinylique et toute combinaison de ceux-ci, et par exemple en une structure composite combinant au moins une couche en undit polymère ou copolymère et une autre couche en undit polymère ou copolymère identique ou différent, ou en un autre polymère ou copolymère.

Des films adaptés, en particulier répondant aux caractéristiques préférées ci-dessus, sont commercialisés.

La barquette est en un matériau couramment utilisé dans ce domaine, par exemple un matériau polyoléfinique ou polyester.

Le ou les disques sont appliqués directement sur les surfaces de la tranche. Il(s) est(sont) plus rigide(s) que le film recouvrant la barquette, il(s) possède(nt) cependant une certaine souplesse pour s'adapter le mieux possible à la surface de la tranche. Effectivement, plus le contact entre le disque et la surface sera intime, plus l'efficacité du disque sera renforcée. Il(s) est(sont) préférentiellement imperméable(s) à l'air, mais peu(ven)t présenter une perméabilité à condition qu'elle reste faible.

Le ou les disques sont avantageusement en un matériau choisi parmi les polyoléfines, par exemple un polyéthylène, un polypropylène, les polyesters et tout copolymère de polyoléfine et/ou de polyester. Selon une variante préférée de l'invention, le ou les disques sont en un matériau transparent pour une présentation plus attractive du produit.

Pour être efficaces, le ou les disques ne nécessitent pas d'être épais, leur épaisseur étant de l'ordre de 20 à 100 µm. Il est cependant important que, du point de vue de leur dimension, ils recouvrent au moins la plus grande partie de la surface de la tranche, voire la totalité de la surface, au risque de voir se former des moisissures non désirées sur les parties laissées libres. A titre d'exemple, le diamètre d'une bûche est d'environ 3 à 10 cm, le diamètre du ou des disques est donc de cet ordre.

L'invention concerne aussi l'utilisation d'un kit tel que décrit ci-dessus pour emballer au moins une tranche d'un fromage, en particulièrement approprié pour conditionner un fromage choisi parmi les fromages de chèvre, les fromages de vache et les fromages de de brebis et qui est affiné. Selon une variante de cette utilisation, le kit de l'invention est destiné à l'emballage de plusieurs tranches empilées de fromage. Chacune des tranches peut alors comporter, sur sa face inférieure, un disque plastique, et seule la tranche directement sous le film plastique, comporter un disque plastique sur sa face supérieure, les disques « inter-tranches » constituant un intercalaire facilitant la séparation des tranches. Cependant, un empilement de tranches limite le développement sur les faces inférieure et supérieure des tranches en contact avec une face supérieure et inférieure de la tranche suivante ou précédente respectivement. Aussi, dans le cadre de la présente invention, un kit peut être utilisé pour emballer un empilement de tranches, un disque étant prévu au moins sur la face supérieure de la dernière tranche, et optionnellement un autre disque étant disposé sur la face inférieure de la première tranche.

Un autre objet de l'invention est un procédé pour emballer au moins une tranche de de fromage, comprenant les étapes suivantes :
On dispose d'un kit tel que défini ci-dessus et d'au moins une tranche de fromage, ladite tranche ayant une face inférieure et une face supérieure,
On applique sur la face supérieure de ladite tranche, et optionnellement sur sa face inférieure, un disque plastique,
On dépose ladite tranche dont au moins la face supérieure, et optionnellement la face inférieure, sont couvertes par un disque, dans une barquette plastique, et
On ferme la barquette avec un film plastique, perméable à l'air, ledit film plastique étant soudé sur la barquette.

Le procédé ci-dessus peut être adapté pour emballer deux tranches de fromage ou plus, il comprend les étapes suivantes :
On dispose d'un kit tel que défini ci-dessus et de deux tranches de fromage, ou plus, chacune des tranches ayant une face inférieure et une face supérieure,
On applique un disque, sur la face inférieure de chaque tranche, on empile les tranches et on applique un disque, sur la face supérieure de la tranche du haut de l'empilement,
On dépose l'empilement dans une barquette plastique, et
On ferme la barquette avec un film plastique, perméable à l'air, ledit film plastique étant soudé sur la barquette.

Le procédé de l'invention inclut avantageusement toutes les caractéristiques mentionnées ci-dessous relativement au kit, ces caractéristiques étant considérées seules ou en combinaison.

On a observé que la solution de l'invention est performante quelle que soit l'origine du fromage, celui pouvant être un fromage de chèvre, un fromage de vache ou un fromage de brebis. Le fromage peut être frais, et selon une variante de l'invention, comme dit précédemment, le fromage peut être affiné, l'affinage étant généralement de l'ordre de 6 à 10 jours pour permettre le développement d'une moisissure dite fleur blanche sur la partie extérieure du fromage qui correspondra au pourtour de la tranche.

Après avoir disposé le fromage dans la barquette, on réalise l'étape de fermeture de la barquette avec le film plastique. Elle peut être effectuée sous atmosphère modifiée d'un gaz neutre, par exemple du CO₂, du N₂ et leurs mélanges. Toutefois, le film étant perméable au gaz, la teneur en oxygène à l'intérieur de la barquette s'équilibre rapidement avec la quantité naturellement présente dans l'air ambiant et cette variante n'est pas préférée. Le film plastique est généralement soudé sur les bords de la barquette. De préférence, il n'est pas en contact avec le disque déposé sur la face supérieure de la tranche.

L'invention concerne aussi une ou des tranches de fromage emballées selon le procédé ci-dessus. Il peut s'agir d'un fromage choisi parmi les fromages de chèvre, les fromages de vache et les fromages de de brebis, de préférence affinés pendant 7 à 10 jours. Qu'elles soient conditionnées à l'unité ou à plusieurs, chaque tranche a un poids de l'ordre de 40 à 110 g; dans certains cas, il peut être supérieur ou inférieur, sans conséquence sur la performance de l'invention.

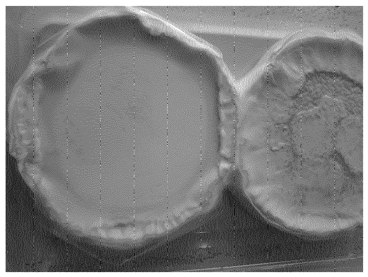

L'invention et ses bénéfices sont illustrés dans l'exemple suivant qui décrit la longévité de tranches d'une bûche de chèvre conditionnées selon l'invention, à l'appui de la figure jointe représentant une photographie de deux tranches de fromage l'une conditionnée selon l'invention, l'autre selon l'art antérieur.

### Exemple : Performance d'un emballage selon l'invention

Le protocole suivant est suivi :
J : Fabrication de bûche de chèvre ayant un diamètre de 74 mm, puis dépose de la bûche sur claie avant entrée en affinage ;
J à J+8 jours : Affinage des produits afin de permettre le développement de la moisissure de surface ;
J+8 : Ressuyage et découpe des produits pour obtenir des tranches de bûche de chèvre lactiques et affinées, dont le grammage sera compris entre 40 et 110 g ;

Dépose à la surface des tranches inférieure et supérieure d'un disque plastique transparent d'un diamètre compris entre 74 mm et 76 mm, en polyéthylène, puis dépose de chaque tranche dans une barquette de conditionnement en copolymère APET/PE (polyéthylène téréphtalate amorphe / polyéthylène);

Un film en un matériau consistant en une combinaison de propylène orienté biaxialement et d'un film PE/EVOH/PE est scellé sur les bordures de la barquette par soudure à chaud. La perméabilité du film à l'air est de 5 mL/min à 50 000 mL/min.

Des essais de conditionnement préalablement réalisés avec ou sans atmosphère protectrice, en particulier un mélange de CO₂ et N₂ (50/50) ne laissent apparaitre aucune différence significative. Le conditionnement est donc, dans le présent exemple, effectué sans injection de gaz neutre dans la barquette au moment de sa fermeture.

Le produit ainsi fabriqué est stocké à une température de 2 à 6°C.

A titre comparatif, le même protocole est opéré à l'exception de la dépose de disques sur les surfaces inférieure et supérieure des tranches.

La figure représente une photographie d'une barquette contenant deux tranches de fromage disposées côte à côte, scellée par le film décrit ci-dessus et stockée à une température de 2 à 6°C pendant 50 jours. La tranche de gauche a été conditionnée selon le procédé de l'invention, à savoir que sur chacune de ses surfaces supérieure et inférieure, un disque tel que décrit ci-dessus a été appliqué avant de sceller la barquette. Au bout de 50 jours de stockage, on retire le film ainsi que le disque de la partie supérieure et inférieure de la tranche de gauche : on observe qu'elle reste intacte, alors que la tranche de droite qui n'a pas été conditionnée selon l'invention présente un développement de moisissures dommageable.

## Revendications

1. Kit pour l'emballage d'au moins une tranche de fromage, ladite tranche ayant une face inférieure et une face supérieure, ledit kit comprenant une barquette plastique dans laquelle la tranche au moins de fromage sera déposée sur sa face inférieure, éventuellement un film plastique perméable à l'air, destiné à fermer, par soudure, la barquette contenant ladite tranche au moins, du côté de sa face supérieure, et au moins un disque plastique peu ou non perméable à l'air, d'une surface sensiblement identique à celle de de la face supérieure, destiné à être appliqué directement contre la face supérieure de ladite tranche au moins.

2. Kit selon la revendication 1, **caractérisé en ce qu'**il comprend au moins deux disques plastique peu ou non perméables à l'air, d'une surface sensiblement identique à celle de chacune des faces inférieure et supérieure, respectivement, destinés à être appliqués directement contre les faces inférieure et supérieure, respectivement, de ladite tranche au moins.

3. Kit selon la revendication 1 ou 2, **caractérisé en ce que** le film plastique destiné à fermer la barquette a une perméabilité à l'air, déterminée par la méthode de Bendtsen, de 5 mL/min à 50 000 mL/min.

4. Kit selon l'une quelconque des revendications 1 à 3, **caractérisé en ce que** le film plastique est en un matériau choisi parmi les polyéthylènes, les polypropylènes, les copolymères éthylène/alcool vinylique et toute combinaison de ceux-ci.

5. Kit selon l'une quelconque des revendications 1 à 4, **caractérisé en ce que** le ou les disques sont en un matériau transparent choisi parmi les polyoléfines, par exemple un polyéthylène, un polypropylène, les polyesters et tout copolymère de polyoléfine et/ou polyester.

6. Kit selon l'une quelconque des revendications 1 à 5, **caractérisé en ce que** le ou les disques ont une épaisseur de 20 à 100 µm.

7. Utilisation d'un kit selon l'une quelconque des revendications 1 à 6, pour emballer au moins une tranche d'un fromage affiné choisi parmi les fromages de chèvre, les fromages de vache et les fromages de de brebis.

8. Utilisation d'un kit selon l'une quelconque des revendications 1 à 6, pour emballer plusieurs tranches empilées d'un fromage affiné choisi parmi les fromages de chèvre, les fromages de vache et les fromages de de brebis, chacune des tranches comportant, sur sa face inférieure, un disque plastique, et seule la tranche directement sous le film plastique, comportant un disque plastique sur sa face supérieure.

9. Procédé pour emballer au moins une tranche de de fromage, comprenant les étapes suivantes :
On dispose d'un kit selon l'une quelconque des revendications 1 à 6 et d'au moins une tranche de fromage, ladite tranche ayant une face inférieure et une face supérieure,
On applique au moins sur la face supérieure et optionnellement sur la face inférieure de ladite tranche, un disque plastique,
On dépose ladite tranche dont au moins la face supérieure et optionnellement la face inférieure, sont couvertes par un disque, dans une barquette plastique, et
On ferme la barquette avec un film plastique, perméable à l'air, ledit film plastique étant soudé sur la barquette.

10. Procédé selon la revendication 9, pour emballer deux tranches de fromage ou plus, selon lequel
On dispose d'un kit selon l'une quelconque des revendications 1 à 6 et de deux tranches de fromage, ou plus, chacune des tranches ayant une face inférieure et une face supérieure,
On applique un disque sur la face inférieure de chaque tranche, on empile les tranches et on applique un disque sur la face supérieure de la tranche du haut de l'empilement,
On dépose l'empilement dans une barquette plastique, et
On ferme la barquette avec un film plastique, perméable à l'air, ledit film plastique étant soudé sur la barquette.

11. Procédé selon la revendication 9 ou 10, **caractérisé en ce que** ledit film plastique n'est pas en contact avec le disque déposé sur la face supérieure de la tranche du haut de l'empilement.

12. Procédé selon l'une quelconque des revendications 9 à 11, **caractérisé en ce que** le fromage est choisi parmi les fromages de chèvre, les fromages de vache et les fromages de de brebis, de préférence affinés pendant 6 à 10 jours.

13. Tranche(s) de fromage emballée(s) selon le procédé de l'une quelconque des revendications 9 à 12.

14. Tranche(s) selon la revendication 13, **caractérisée**(s) en ce que le fromage est choisi parmi les fromages de chèvre, les fromages de vache et les fromages de de brebis, de préférence affinés pendant 7 à 10 jours.

15. Tranche(s) selon la revendication 13 ou 14, **caractérisée**(s) en ce que le poids de la tranche ou de chaque tranche a un poids de 40 à 110 g.
